# EUROPEAN PATENT APPLICATION

(11) **EP 4 617 945 A1**
(43) Date of publication of application: **17.09.2025**
(21) Application number: 24163395.7
(22) Date of filing: 13.03.2024
(51) Int. Cl.: G06F 40/35, G06F 16/332, G06F 16/33, G06F 40/295

(54) **GROUNDING RESPONSES FROM A LARGE LANGUAGE MODEL**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

Various examples relate to a method for grounding responses from a Large Language Model (LLM). The LLM is prompted using a prompt that has been augmented using information retrieved from a knowledge base and a response is received from the LLM. Entities are extracted from the response and from the information retrieved from the knowledge base. A grounding service checks the response is grounded with respect to the knowledge base by checking the types and values of critical entities extracted from the response match the types and values of critical entities extracted from the information retrieved from the knowledge base.

## Description

The present disclosure relates to a grounding service such as for mitigating hallucinations in output from Large Language Models where retrieval augmented generation (RAG) is used.

### BACKGROUND

Large Language Models (LLMs) are a type of machine learning model used to generate natural language. Recently, they have become increasingly popular and have been used in a variety of applications such as writing books, summarizing documents, writing poetry, writing source code and more. Large language models typically have billions of parameters and are extremely computationally expensive to train; they use transformer neural network architectures giving the ability to perform attention and self-attention on sequences of data such as text and source code and other sequences in different modalities such as audio, speech signals, images, videos and more.

There is a growing desire to use LLM functionality in specific fields such as telecommunications and communications network services however this presents a number of challenges. One of these challenges relates to so called hallucinations which are inferences produced by LLMs that are factually incorrect or nonsensical.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In an aspect of the technology there is a computer implemented method for grounding responses from a Large Language Model (LLM) the method comprising the steps of:
prompting the LLM using a prompt that has been augmented using information retrieved from a knowledge base;
receiving a response from the LLM;
extracting entities from the response and from the information retrieved from the knowledge base;
checking the response is grounded with respect to the knowledge base by checking that entities extracted from the response whose types are present in a predefined list of critical entities match in value the entities extracted from the information retrieved from the knowledge base;
in response to the check being successful using the response for a downstream process comprising any of:
   sending the response to a user interface;
   using the response to control a communications network.

The method enables hallucinations to be mitigated in a principled manner which is efficient and scalable. The method enables responses that contain training data of the LLM rather than information from the knowledge base to be identified.

Preferably the method comprises checking the response is grounded with respect to the knowledge base by checking only the entities extracted from the response which are also critical entities. This facilitates efficiency and scalability since not all the entities are processed. However, performance is not lost since critical entities are checked.

Preferably the method comprises accessing a list of the critical entities from a store. Having the list available in advance gives efficiency at run time.

Preferably the method comprises determining the critical entities by;
receiving a plurality of critical entities from a human expert
submitting a plurality of user questions to the LLM;
receiving a plurality of responses from the LLM;
extracting entities related to the critical entities from the responses.

This gives an automated, principled way to obtain the list of critical entities.

Preferably the method comprises, in response to the check being unsuccessful incrementing a counter, and in response to the counter being below a threshold, submitting the prompt, augmented using the information retrieved from the knowledge base, to the LLM again. This gives the benefit that because of the probabilistic nature of the LLM the response will be different from the previous response and may be grounded.

Preferably the method comprises, in response to the check being unsuccessful, incrementing a counter, and in response to the counter being above a threshold, revising the prompt to specify that entities which led to the determination of the prompt being ungrounded are to be excluded from the response, and subsequently submitted the revised prompt to the LLM. This gives a prompt engineering way of enabling the hallucination to be mitigated

Preferably the extraction of entities occurs via a Named Entity Recognition (NER) method and relations between entities are computed using a relation extraction method. This gives efficiency and accuracy.

Preferably the method comprises retrieving the information from the knowledge base using a vector search, by encoding the prompt into an embedding vector and searching for neighbouring vectors in a vector database where the knowledge base is a vector database. This gives accurate retrieval.

Preferably the method comprises retrieving the information from the knowledge base using a relational database query, by translating the prompt into a relational database query using the LLM. This means that the user does not need to understand relational database language.

In another aspect there is a computer program comprising instructions which when executed on a computer implement the method of any of the examples described above.

In another aspect there is an apparatus comprising:
at least one processor;
a memory storing instructions that when executed by the at least one processor performs a method for grounding responses from a Large Language Model (LLM) the method comprising the steps of:
prompting the LLM using a prompt that has been augmented using information retrieved from a knowledge base;
receiving a response from the LLM;
extracting entities from the response and from the information retrieved from the knowledge base;
checking the response is grounded with respect to the knowledge base by checking that entities extracted from the response whose types are present in a predefined list of critical entities match in value the entities extracted from the information retrieved from the knowledge base;
in response to the check being successful using the response for a downstream process comprising any of:
   sending the response to a user interface;
   using the response to control a communications network.

The apparatus gives a way to accurately and efficiently control a communications network.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a grounding service for use with a Large Language Model (LLM);
FIG. 2 is a flow diagram illustrating a method for extracting critical entities from an LLM;
FIG. 3 is a flow diagram illustrating a method for extracting entities from the output of an LLM used in the context of a Retrieval Augmented Generation (RAG);
FIG. 4 is a flow diagram illustrating a method for extracting entities from the result of a user query search into a knowledge base as part of Retrieval Augmented Generation;
FIG. 5 is a flow diagram of an example method performed by the grounding service;
FIG. 6 is a flow diagram illustrating a method performed by the grounding service in response to the LLM RAG response being determined as ungrounded;
FIG. 7 is a flow diagram of the method of FIG. 5 with more detail;
FIG. 8 is a schematic diagram of a computing-based device for deploying a grounding service;

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

As mentioned above, there is a growing desire to use LLM functionality in specific fields such as telecommunications and communications network services however this presents a number of challenges.

One approach has been to fine-tune a pre-trained LLM on a particular field such as telecommunications and communications network services. However, a downside of fine-tuning a pre-trained LLM is that it's time consuming and expensive since the model weights themselves are changed. Indeed to fine-tune an LLM on a telecommunications field, a large dataset needs to be prepared from a telecommunications knowledge base in the form of questions and answers. It's also expensive to execute the fine-tuning and a new LLM needs to be produced and used for the telecommunications field. Anytime the knowledge base is updated the LLM would need to be retrained and the training dataset would need to be recreated.

Another approach for making an LLM specific to a particular field such as telecommunications and communications network services is to use prompt engineering. This is where the language of the instruction provided to the LLM is tweaked to get the best quality responses for the particular field. This is effectively making the task fit the pretrained LLM rather than training the LLM on the task. One limitation of this technique is when an application requires answers from data that the LLM was not trained on, such as personal information, events that occurred after the LLM was trained, or private enterprise knowledge bases.

A technique called Retrieval Augmented Generation (RAG) may be used to enable an LLM to become bespoke to a particular field such as telecommunications or a particular proprietary dataset. RAG allows LLMs to access additional data resources that aren't a part of the LLMs training data. In this way an LLM can be tailored to a particular field such as telecommunications and communications network services without fine-tuning the LLM. This is done by extracting data from the additional data resources (which are specific to the chosen field such as telecommunications and communications network services) and including this data in the LLM prompt. The data added to the prompt is chosen carefully due to the limited input size (prompt size) of LLMs.

For example, a telecommunications business may use a chatbot based on an LLM to answer end user queries in real time, such as requests for a customer service telephone number, troubleshooting instructions, addresses. The use of RAG in this scenario ensures that the LLM has access to a database with up to date information about telecommunications and communications network services.

The basic principle of RAG is to extract chunks of data from a knowledge base that potentially contain the answer to a user query and include these in an LLM prompt. The task for the LLM is then to interpret the chunks provided and use the information within to answer the user's query.

There are several challenges with RAG however, the LLMs have limited input sizes, so only a certain amount of information (often about 2250 to 4500 words in total including the user input and the LLM output for open source models) can be included in the prompt, so the retrieved information must be carefully chosen to best make use of this space whilst covering the necessary information to answer the query. There are also challenges in ensuring the LLM uses the provided documentation to answer questions rather than its own trained knowledge.

The inventors recognize that when using RAG, an LLM may produce an answer that comes from its own training data or hallucinate. When using RAG, if the LLM produces an answer that comes from its own training data, that answer may be factually incorrect with respect to the knowledge base used to deploy RAG. Hallucinations are LLM outputs which are factually incorrect or nonsensical with respect to the knowledge base used to deploy RAG.

Various examples relate to a method for grounding responses from a Large Language Model (LLM). The LLM is prompted using a prompt that has been augmented using information retrieved from a knowledge base and a response is received from the LLM. Entities are extracted from the response and from the information retrieved from the knowledge base. A grounding service checks the response is grounded with respect to the knowledge base by checking the types and values of critical entities extracted from the response match the types and values of critical entities extracted from the information retrieved from the knowledge base.

In various examples described herein there is a grounding service for use by RAG LLM deployments in order to mitigate LLM responses which are factually incorrect, inconsistent or nonsensical with respect to the knowledge base used to deploy RAG. The grounding service gives a fully automated principled method for checking LLM responses are grounded in the knowledge base. The term "grounded" refers to the responses containing entities, whose types exist in a list of pre-defined critical entity types, being consistent with corresponding entities present within an external knowledge base. Grounding aims to prevent hallucination when the LLM is generating output containing critical entity types. The grounding service operates without the need to use a second LLM as a judge of a first LLM since this a problematic where the second LLM itself hallucinates. The grounding service operates without the need for a human expert to judge the output of an LLM. The grounding service aims at guaranteeing that at least some information contained in a response produced by a LLM based chatbot used in a RAG solution only comes from a local knowledge base and not from the LLM training data or worse an hallucination.

In some examples the grounding service aims at guaranteeing critical information rather than all information in the LLM response. Critical information is data such as telephone numbers, addresses and other named entities where a named entity is a person, location, organization, product, or object that can be denoted with a proper name. Critical information is data that is needed to enable a task to be successfully completed where the task is performed by the RAG deployment. In an example, the task is any of: troubleshooting errors in a telecommunications network, mitigating cyber attacks, providing a customer service chatbot to users of a telecommunications service. By guaranteeing critical information only rather than all information in an LLM response the grounding service becomes scalable to web scale applications.

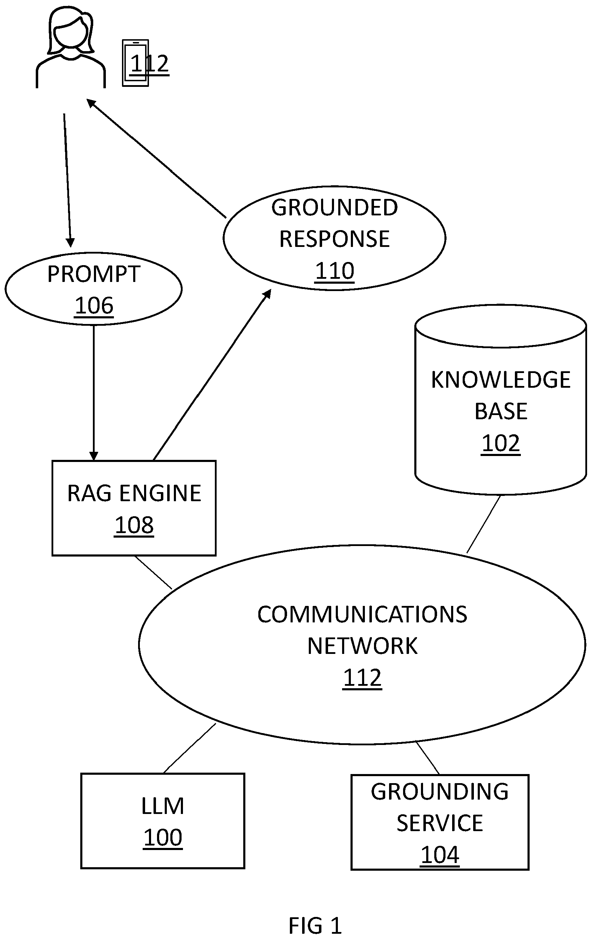

FIG. 1 is a schematic diagram of a grounding service 104 for use with a Large Language Model (LLM) 100 in a RAG deployment. A RAG deployment is where a RAG engine 108 is used in conjunction with a knowledge base 102 and an LLM such as LLM 100. In the example of FIG. 1 the grounding service is deployed as a web service in the cloud although this is not essential. The grounding service 104 is computer implemented and may be deployed at an end user device, an on premise server, or any other computing entity accessible to a RAG engine 108. The functionality of the grounding service is distributed between more than one computing entity in some cases. The grounding service aims at guaranteeing that at least some information contained in a response 110 produced by a LLM 100 used in a RAG solution only comes from knowledge base 102 and not from training data of the LLM 100 or worse an hallucination.

The LLM is a machine learning model comprising a neural network with a transformer architecture enabling attention and self-attention. In some examples the LLM has billions of parameters. A non-exhaustive list of examples of LLMs which may be used is: Llama, GPT 4, Bloom, Gemini.

The knowledge base 102 is any store of data such as any one or more of: a relational database, a graph database, a vector database. The knowledge base 102 may hold only data from a particular enterprise, or only data relating to a particular field or topic. In an example, the knowledge base 102 holds only data about a telecommunications network service. The knowledge base 102 is distributed in some cases.

The RAG engine 108 is computer implemented. It comprises functionality to enable retrieval augmented generation by operating with the LLM 100. The RAG engine receives prompts from end user equipment, such as prompt 106, augments the prompt 106 with data retrieved from knowledge base 102, and submits the augmented prompt to LLM 100. The RAG engine 108 has database access technology to enable the RAG engine 108 to access knowledge base 102 using a query computed by the RAG engine 108 so as to retrieve data to augment prompt 106. The RAG engine 108 computes the query from prompt 106 and according to a type of database technology used to form the knowledge base 102. For example, where the knowledge base 102 is a relational database the RAG engine 108 computes the query in the form of a relational database query. Where the knowledge base 102 is a vector database the RAG engine 108 computes the query in the form of a vector which is an embedding vector computed from prompt 106. The embedding vector is used by the vector database to search for neighbouring vectors in the vector database. The neighbouring vectors are decoded into information which is used to augment the prompt 106.

The augmented prompt is submitted by the RAG engine 108 to the LLM 100. The LLM 100 computes a response to the augmented prompt. The response is processed by grounding service 104 and if successfully grounded by the grounding service 104 is returned to the end user computing device 112 and/or used to trigger downstream operation. In an example the downstream operation is to establish a telephone call between the end user computing device 112 and a customer service desk. In another example the downstream operation is to update data in a database associated with an account of the end user with a telecommunications service. In another example the downstream operation is to configure an amount of bandwidth available to the end user computing device over the communications network.

The RAG engine 108, knowledge base 102, grounding service 104 and LLM 100 are in communication with one another such as via communications network 112 which is the internet or any other communications network such as an intranet, wide area network or other communications network.

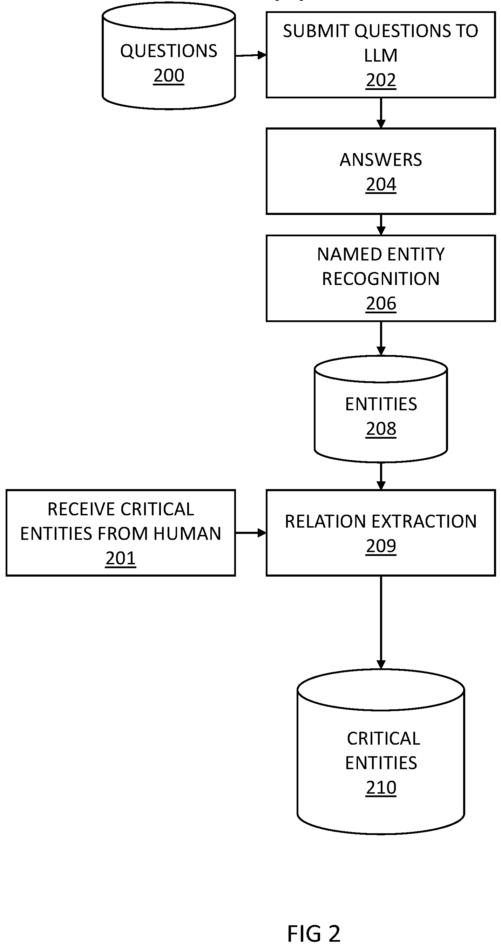

The grounding service 104 has a list of entity types, which is referred to as a list of critical entities. The entity types are classes of entities such as "phone number" rather than specific instances of phone numbers. Another example of a class of entities is "department" where an instance of that class is "customer service". This enables the grounding service to stay relevant even when the knowledge base is updated as entity values are only checked at run time. There are various ways in which the list of critical entities may be formed. In some cases the list of critical entities is manually constructed by human experts. In another case the list of critical entities produced by human experts is augmented automatically by prompting an LLM with a plurality of predefined questions, obtaining the responses from the LLM and carrying out named entity recognition (NER) on the responses, then performing relation extraction for those critical entities and tagging them in the list of critical entities with their related entity types as now explained with reference to FIG. 2.

FIG. 2 is a flow diagram illustrating an optional method for extracting critical entities from an LLM. FIG 2. is a flow diagram illustrating the method for the extraction of critical entities 210 from the LLM 100 for use by the grounding service 104. A first operation 201 of the method of FIG. 2 is receipt of input from a human expert defining a plurality of critical entities to be grounded. The method comprises the submission of a plurality of user questions 200 into the LLM 100 to produce answers 204. The user questions are a range of questions expected to be asked by users of a service to be provided by the RAG deployment. The method uses a Named Entity Recognition (NER) process 206 to extract a plurality of entities 208 from the answers 204. The plurality of entities obtained at operation 208 is filtered 209 to select only those entities that have a relationship with the critical entities defined by the human expert in operation 201. The selected entities are added to the list of critical entities 210. Any suitable NER process is used such as statistical models, machine learning, GATE, OpenNLP, SpaCy. In order to extract semantic relationships between entities any suitable relation extraction process is used including but not limited to: rule based relation extraction, weakly supervised relation extraction, supervised relation extraction, distantly supervised relation extraction, unsupervised relation extraction. For a general class of entity type (e.g. phone number) the process of FIG. 2 enables the grounding service to only check for a subset of entity types from the general one defined by the human. For example instead of having an entry in the list of critical entities that just states "phone number", the process has an entry that includes two or more entity types: the main entity and the related ones (.e.g. phone number + company department). That would ensure the grounding is very specific. For example, if the user requests the phone number of customer support, the process checks in the knowledge base search output, for the presence of the phone number for this specific service rather than a random phone number present in the knowledge base. Having an automated initial step using predefined questions now performs a process that can scale as the number of entities extracted is limited to the ones related to human input.

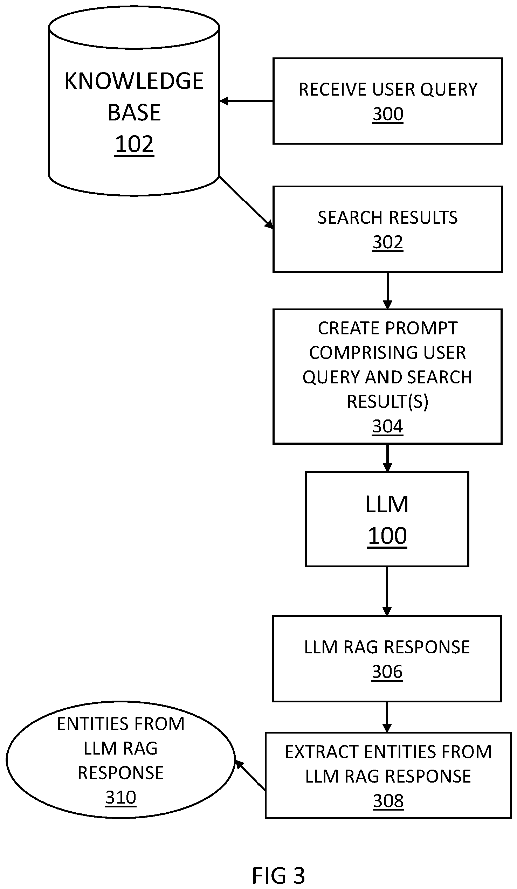

The grounding service 104 is able to extract entities from LLM RAG responses (that is responses from the LLM from augmented prompts, augmented using the RAG engine). The ability of the grounding service to extract entities in this way is now explained with reference to FIG. 3.

FIG. 3 is a flow diagram illustrating a method for extracting entities from the output of an LLM used in the context of a Retrieval Augmented Generation (RAG). The method of FIG. 3 is performed by the grounding service 104 of FIG. 1.

FIG 3. is a flow diagram illustrating the method for the extraction of entities 310 from the output of the LLM 100 used in the context of a RAG as part of the grounding service 104. A user query 300 is searched into knowledge base 102 as part of RAG to produce search results 302. A prompt 304 is created comprising the original user query 300 and the search results 302, and said prompt 304 is fed through the LLM 100 to produce an LLM RAG response 306. The NER process 206 is used to extract entities 310 from the LLM RAG response 306.

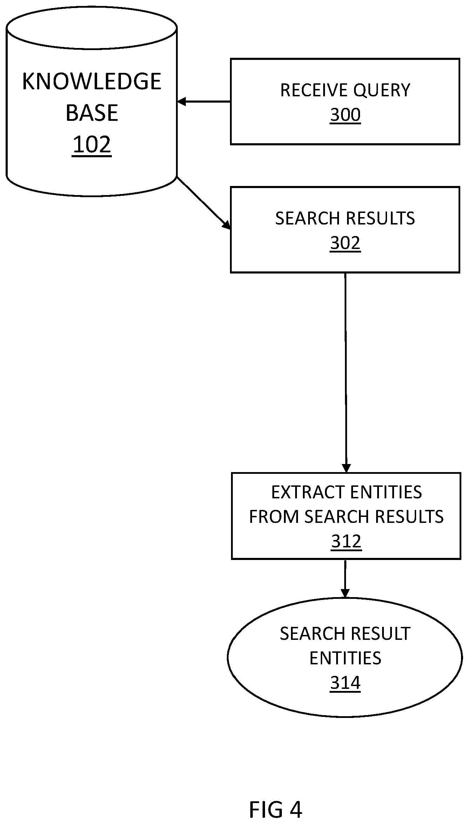

The grounding service 104 is also able to extract entities from search results obtained from the knowledge base; that is from the search results which are used to augment prompt 106 as part of the RAG process. This is now explained with reference to FIG. 4.

FIG. 4 is a flow diagram illustrating a method for extracting entities from the result of a search into a knowledge base as part of Retrieval Augmented Generation. The method of FIG. 4 is performed by the grounding service. The prompt 106 is used to form a query 300 which is searched into the knowledge base 102 to produce search results 302. The NER process 206 is used to extract entities 314 from the search results 302. The resulting entities 314 are stored and are referred to as search result entities.

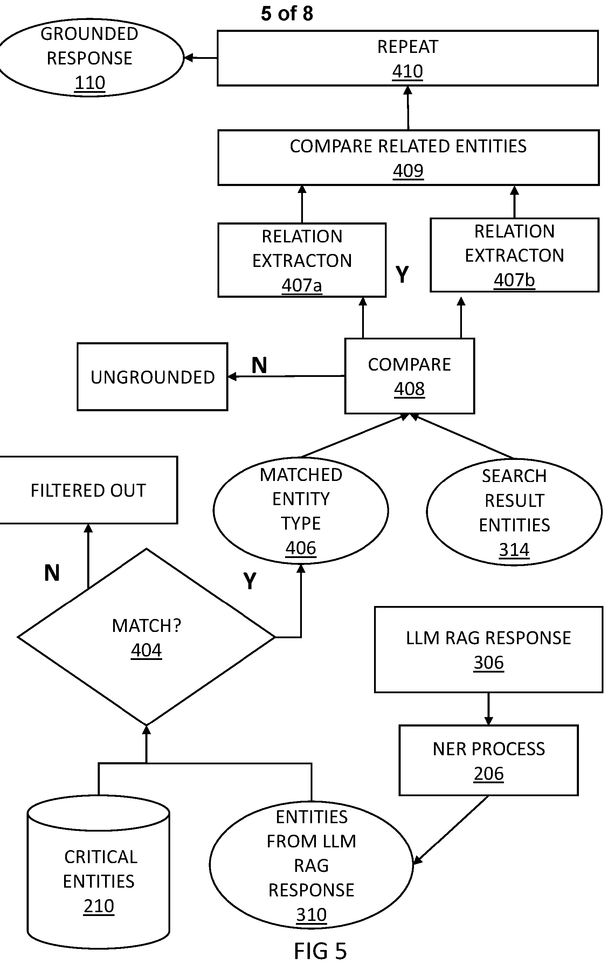

FIG. 5 is a flow diagram of an example method performed by the grounding service. The grounding service receives an LLM RAG response 306 from the RAG engine.

Entities 310 are extracted from the LLM RAG response 306 via the NER process 206. Types of the entities 310 are compared to those of the critical entities 210 to produce entities 406 that are a match in both. The matching process 404 is a type of filter that lets through only those entities in the LLM RAG response which are of critical entity types. Those which are "let through" are referred to as matched entity types. The entities which are not let through are filtered out.

For each matched entity type 406 from the RAG response and the search result entities 314, their corresponding values are compared 408. If those values match (for example the entities with type "phone number" are found to have the value "01234 56789" in both the RAG response and the search result), relation extraction is performed on the matched entities 407a and 407b (407a does relation extraction on the entity types 406 and 407b does relation extraction on the search result entities 314). The extracted related entities are tagged to the matched entities now referred to as main entities. The relation extraction process uses the same technology as explained with reference to FIG. 2 above.

The related entities from both sets are compared in operation 409 first by comparing their entity types. If the entity types match then compare 409 the related entity values.

Compare 409 the related entity values ("sales department") between the LLM+RAG and the search output. If they all match (after repeating 410 as necessary to check all the related entity values), validate the LLM+RAG output as grounded 110.

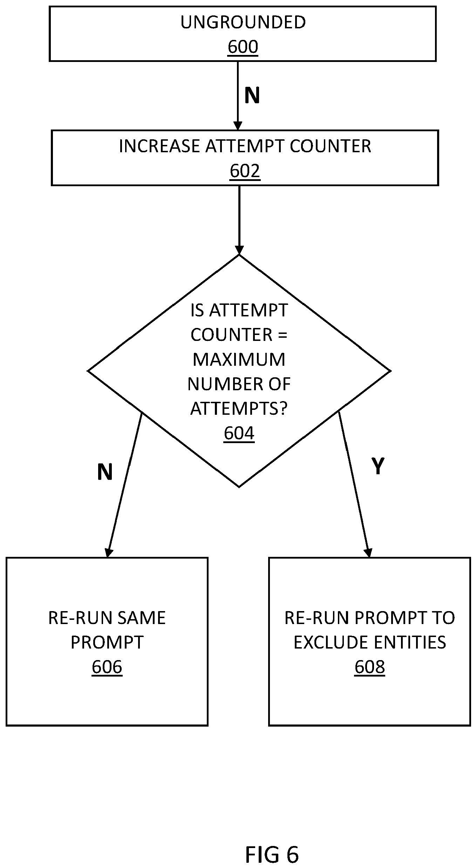

If any step fails, proceed to the process of FIG. 6.

FIG. 6 is a flow diagram illustrating a method performed by the grounding service in response to the LLM RAG response being determined as ungrounded. An LLM RAG response has been determined ungrounded using the process of FIG. 5. The grounding service increments 602 an attempt counter. If the attempt counter has not reached a maximum number of attempts at check 604, the same prompt is re-run 606 in the LLM. Since the LLM is probabilistic, the response will be different from the previous LLM RAG response 306 and may be grounded. If the attempt counter has reached the maximum number of attempts, the entities which led to the determination of "ungrounded" are specified in the prompt as needing to be excluded from the response, before the prompt is re-run 608 in the LLM.

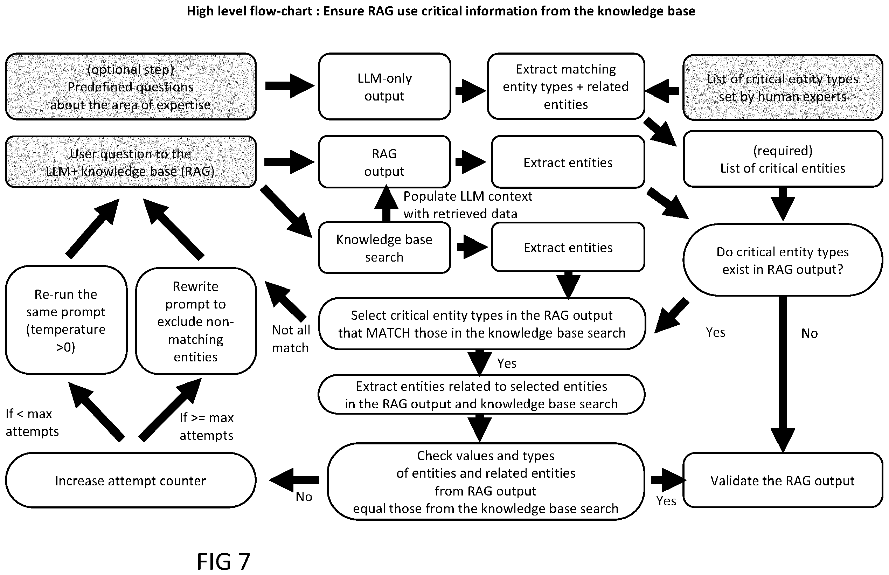

FIG. 7 is a flow diagram of the method of FIG. 5 with more detail.

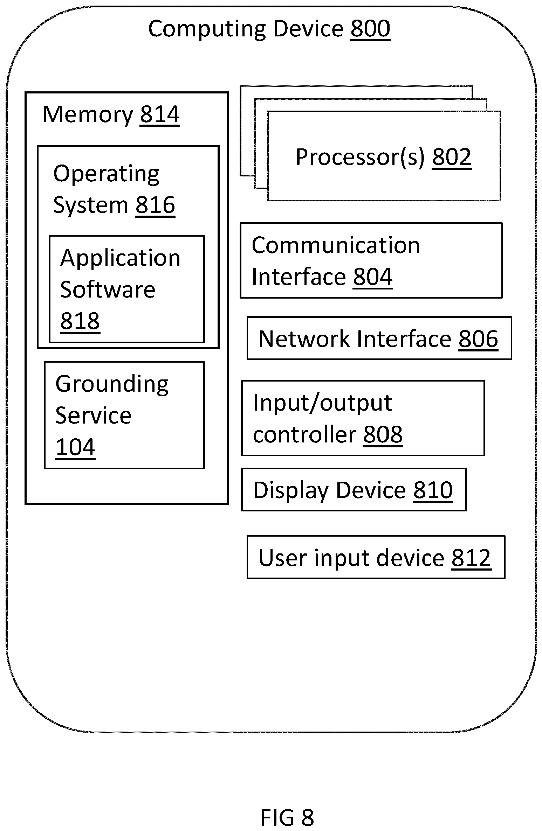

FIG. 8 illustrates various components of an example computing device 800 in which embodiments of the grounding service 104 are implemented in some examples. The computing device is of any suitable form such as a smart phone, a desktop computer, a laptop computer.

The computing device 800 comprises one or more processors 802 which are microprocessors, controllers or any other suitable type of processors for processing computer executable instructions to control the operation of the device in order to perform the methods of figures 2 to 6. In some examples, for example where a system on a chip architecture is used, the processors 802 include one or more fixed function blocks (also referred to as accelerators) which implement a part of the method of figures 2 to 6 in hardware (rather than software or firmware). That is, the methods described herein are implemented in any one or more of software, firmware, hardware. The computing device has a data store holding prompts, augmented prompts, named entities, critical entities, thresholds, counters and other data. The computing device has the grounding service 104 within the memory 814. Platform software comprising an operating system 816 or any other suitable platform software is provided at the computing-based device to enable application software 818 to be executed on the device. Although the computer storage media (memory 814) is shown within the computing-based device 800 it will be appreciated that the storage is, in some examples, distributed or located remotely and accessed via a network or other communication link (e.g. using communication interface 804).

The computing-based device 800 also comprises an input/output controller 808 arranged to output display information to a display device 810 which may be separate from or integral to the computing-based device 800. The display information may provide a graphical user interface such as to display grounded responses. The input/output controller 808 is also arranged to receive and process input from one or more devices, such as a user input device 812 (e.g. a mouse, keyboard, camera, microphone or other sensor). In some examples the user input device 812 detects voice input, user gestures or other user actions. In an embodiment the display device 810 also acts as the user input device 812 if it is a touch sensitive display device. The input/output controller 808 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer implemented method for grounding responses from a Large Language Model (LLM) the method comprising the steps of:
prompting the LLM using a prompt that has been augmented using information retrieved from a knowledge base;
receiving a response from the LLM;
extracting entities from the response and from the information retrieved from the knowledge base;
checking the response is grounded with respect to the knowledge base by checking that entities extracted from the response whose types are present in a predefined list of critical entities match in value the entities extracted from the information retrieved from the knowledge base;
in response to the check being successful using the response for a downstream process comprising any of:
sending the response to a user interface;
using the response to control a communications network.

2. The computer implemented method of claim 1 comprising checking the response is grounded with respect to the knowledge base by checking only the entities extracted from the response which are also critical entities.

3. The computer implemented method of claim 2 comprising accessing a list of the critical entities from a store.

4. The computer implemented method as claimed in claim 2 or claim 3, comprising determining the critical entities by;
receiving a plurality of critical entities from a human expert
submitting a plurality of user questions to the LLM;
receiving a plurality of responses from the LLM;
extracting entities related to the critical entities from the responses.

5. The computer implemented method as claimed in claim 1, comprising, in response to the check being unsuccessful incrementing a counter, and in response to the counter being below a threshold, submitting the prompt, augmented using the information retrieved from the knowledge base, to the LLM again.

6. The computer implemented method as claimed in claim 1, comprising, in response to the check being unsuccessful, incrementing a counter, and in response to the counter being above a threshold, revising the prompt to specify that entities which led to the determination of the prompt being ungrounded are to be excluded from the response, and subsequently submitted the revised prompt to the LLM.

7. The computer implemented method of any preceding claim, wherein the extraction of entities occurs via a Named Entity Recognition (NER) method and relations between entities are computed using a relation extraction method.

8. The computer implemented method of any preceding claim comprising retrieving the information from the knowledge base using a vector search, by encoding the prompt into an embedding vector and searching for neighbouring vectors in a vector database where the knowledge base is a vector database.

9. The computer implemented method of any of claims 1 to 7 comprising retrieving the information from the knowledge base using a relational database query, by translating the prompt into a relational database query using the LLM.

10. A computer program comprising instructions which when executed on a computer implement the method of any of claims 1 to 9.

11. An apparatus comprising:
at least one processor;
a memory storing instructions that when executed by the at least one processor performs a method for grounding responses from a Large Language Model (LLM) the method comprising the steps of:
prompting the LLM using a prompt that has been augmented using information retrieved from a knowledge base;
receiving a response from the LLM;
extracting entities from the response and from the information retrieved from the knowledge base;
checking the response is grounded with respect to the knowledge base by checking that entities extracted from the response whose types are present in a predefined list of critical entities match in value the entities extracted from the information retrieved from the knowledge base;
in response to the check being successful using the response for a downstream process comprising any of:
sending the response to a user interface;
using the response to control a communications network.

12. The apparatus of claim 11 wherein the instructions perform a method comprising checking the response is grounded with respect to the knowledge base by checking only the entities extracted from the response which are also critical entities.

13. The apparatus of claim 12 wherein the instructions perform a method comprising determining the critical entities by;
receiving a plurality of critical entities from a human expert
submitting a plurality of user questions to the LLM;
receiving a plurality of responses from the LLM;
extracting entities related to the critical entities from the responses.

14. The apparatus of claim 11 wherein the instructions perform a method comprising, using a relation extraction method to compute related entities by computing relations between critical entities and entities obtained using named entity recognition, and using the related entities to perform the grounding..

15. The apparatus of claim 11 wherein the instructions perform a method comprising, in response to the check being unsuccessful, incrementing a counter, and in response to the counter being above a threshold, revising the prompt to specify that entities which led to the determination of the prompt being ungrounded are to be excluded from the response, and subsequently submitted the revised prompt to the LLM.
